# NEW EUROPEAN PATENT SPECIFICATION

(11) **EP 2 614 697 B3**
(45) Date of publication of this specification: **23.09.2020**
(45) Mention of the grant of the patent: 02.01.2019
(21) Application number: 13150957.2
(22) Date of filing: 19.11.2009
(51) Int. Cl.: A01D 34/66, A01D 75/18

(54) **Agricultural machine having an impact protection**
Landwirtschaftsmaschine mit Aufprallschutz
Machine agricole dotée d'une protection contre les impacts

(30) Priority: 20.11.2008 NL 1036216
(43) Date of publication of application: 17.07.2013
(62) Divisional of application: 09075511.7
(73) Proprietor: Lely Patent N.V., 3147 PB Maassluis (NL)
(72) Inventor: Oudemans, Jelle Fredo, 3147 PA Maassluis (NL)
(74) Representative: AGCO Intellectual Property Department

(56) References cited:
- EP-A1- 0 161 466
- EP-A1- 0 356 358
- EP-A1- 0 679 327
- EP-A1- 1 925 198
- EP-A2- 1 266 551
- DE-A1- 2 811 768
- DE-A1- 2 825 678
- DE-U1- 9 007 819
- GB-A- 1 496 753
- NL-A- 7 803 121

## Description

### BACKGROUND OF THE INVENTION

The invention relates to an agricultural machine, in particular configured to mow crops, comprising an impact protection, also called break-out protection. The invention further relates to an assembly of such an agricultural machine and a tractor which carries the agricultural machine and moves it forward. The invention relates in particular to agricultural machines of this type comprising a tool beam which carries the tools and projects unilaterally from a tractor.

When carrying out the activities, the tools may come into contact with obstacles, such as stones, present on the ground. To prevent components of the machine from being damaged, there may be provided facilities which, when a specific force or moment is exceeded, cause the tool beam carrying the tools to yield to some extent by means of a tilting or break-away movement in a direction opposite the direction of travel and in an upward direction, so that the obstacle is bypassed.

A first example has been described in Dutch patent application 90.02867, in the form of a collision protection for a laterally projecting tool beam, which is mounted to a three-point suspension of a tractor, comprising ball hinges at the location of the lower (inner and outer) suspension points, wherein, between the tool beam and the inner suspension point, there is provided a tilting plate which is rotatable against torsional spring force in a vertical plane. In the event of a collision of the tool beam with an obstacle, it is thus possible for the tool beam to move rearwards and upwards.

A further example has been described in European patent application 1.300.065. The tool beam is mounted on a support frame which is mounted to a tractor by means of a three-point suspension. At the location of the outer, left, suspension point, the support frame is provided with a deformable three-rod system. Ball hinges are mounted at all three suspension points. In the event of a collision of the laterally projecting tool beam, the latter will be able to pivot about an axis through the upper and the inner suspension point, the three-rod system allowing a forward movement of the there located (outer) end of the support frame which carries the tool beam.

Another example has been described in European patent application 1.925.198. In this document too, the tool beam is mounted to a support frame, the support frame being mounted to the tractor by means of a three-point suspension while using ball hinges. At the location of the outer, left suspension point, there is interposed a tilting plate which, during operation, has been pre-tightened into a tilting position in which the support frame has been rotated upwardly, away from an obstacle. In addition thereto, the inner suspension point can be designed accordingly.

### SUMMARY OF THE INVENTION

It is an object of the invention to provide an agricultural machine/assembly of the type mentioned in the preamble, by means of which the risk of damage as a result of hitting an obstacle can be limited.

An object of the invention is to provide an agricultural machine/assembly of the type mentioned in the preamble, by means of which the tool beam can break away in an alternative manner in the event of a collision with an obstacle.

To achieve at least one of these objects, the invention provides an assembly of a tractor with a three-point suspension and a device for performing activities on an agricultural land, comprising at least one tool beam, a portion of which on one side projects laterally with respect to the tractor and which comprises a number of juxtaposed tools, such as crop mowers, which are supported by the tool beam, wherein the tool beam is mounted to a support frame which, at the location of a first, a second and a third mounting position, is mounted to the three-point suspension of the tractor, wherein the first mounting position and the second mounting position, respectively, are located at the end of the support frame which faces away from the projecting portion of the tool beam, and at a location between the first mounting position and the projecting portion of the tool beam, respectively, and the third mounting position is located above the first and the second mounting position, wherein the support frame is divided into a first support frame portion on which the tool beam is mounted and a second support frame portion, wherein the first support frame portion extends between the first mounting position and the tool beam, wherein the second support frame portion defines at least the second and third mounting positions, wherein the first support frame portion is connected by means of a support device to the second support frame portion, which support device, at one or more locations which, viewed in a direction transverse to the direction of travel, are spaced apart from the first mounting position, movably interconnects the first and the second support frame portion for supporting the first support frame portion in a break-away position spaced apart from the second support frame portion, wherein the first support frame portion is rotatable in or near the first mounting position, in a hinge, taking along the tool beam, between an operative position and one or more break-away positions about an axis which has a vertical directional component and further rotatable in said hinge about an axis which has a horizontal directional component parallel to the direction of travel of the tractor, and in that the hinge is stationary with respect to the first mounting point and with respect to the first support frame portion characterised in that the assembly is further provided with locking means for locking the first support frame portion and the second support frame portion against moving away from each other, wherein the locking means are provided, on the one hand, on the tool beam and, on the other hand, on the second support frame portion, wherein the tool beam is movable with respect to the first support frame portion between a substantially horizontal operative position and a substantially vertical transport position in which the locking means are effective, and wherein, the locking means are adapted for activation by moving the first support frame portion into the transport position. The hinge may be a ball hinge, that is a hinge which has three axes of rotation, wherein the angles to be achieved are limited. The said axes with vertical and horizontal directional components, respectively, are in particular vertical and horizontal, parallel to the direction of travel.

DE2811768 discloses a tractor with a three-point suspension and a device for performing activities on an agricultural land in line with the preamble portion of claim 1.

In one embodiment, the support device is configured for the spatial orientation of the first support frame portion in the break-away position, so that the orientation thereof, in particular with respect to the hinge, is defined. Depending on the design of the support device, in particular in the embodiment having a plurality of connecting or link rods to be described hereafter, the first support frame portion can be given a favourable direction in the break-away position and in the path leading thereto. This can, for example, be an in front upwardly tilted position, when viewed in a vertical plane parallel to the direction of travel, as a result of which the obstacle will be avoided earlier.

The second support frame portion, which preferably forms a stiff body between the second and the third mounting position, may be provided with a positioning stop for the first support frame portion, whereby the operative position is defined. The second support frame portion may also be provided with a free support stop for the first support frame portion in the operative position, by means of which the hinge and the support device can be relieved during normal operation.

To enhance the stability, the support device may movably interconnect the first and the second support frame portion by means of one or more connections, in particular rods, which, viewed in projection on a vertical plane perpendicular to the direction of travel, are located at least partly, preferably wholly, between the second and the third mounting point. Such an arrangement occupies little space.

In an elaboration thereof, the support device comprises two connections for movably interconnecting the first and the second support frame portion, which connections, viewed in a horizontal transverse direction, transversely to the direction of travel, are spaced apart from each other, wherein, preferably, the two connections are both wholly located on the same side of the first mounting position, viewed in the aforementioned transverse direction. This is advantageous for generating a moment on the first support frame portion. Both connections can be tension loaded when the break-away movement is made. The two connections promote the orientation of the first support frame portion into and in the break-away position.

Alternatively, in addition to the aforementioned movable connection that is located at the aforementioned transverse distance from the first mounting position, the support device can also provide a movable connection between the two support frame portions, which connection is located near the first mounting position, in particular extends over it, in order to form there a pressure-loaded connection, such as a pusher rod, when the first support frame portion is moved into the break-away position. Such an arrangement leaves more space free lateral from the first mounting point.

For providing the movable connection between the first and the second support frame portion, the support device can comprise at least one link rod, which is movably connected by a first end to the first support frame portion and by a second end to the second support frame portion. It should be noted that by link rod is meant a connection, possibly adjustable in length, which, at its ends, is movably, in particular rotatably, in particular hingedly, connected to the constructional elements to be connected and transfers forces therebetween according to the connecting line between its ends.

Preferably, the support device comprises at least a first and a second link rod, which are each movably, in particular rotatably, in particular hingedly, connected by a first end to the first support frame portion and by a second end to the second support frame portion.

If the first ends of the two link rods are spaced apart from each other in a transverse direction, and/or the second ends of the two link rods are spaced apart from each other in a horizontal transverse direction, transversely to the direction of travel, the control of the break-away movement can positively be influenced.

At least one end of the link rod or at least one of the two link rods can form a hinge with two hinge axes, preferably a ball hinge. Preferably, each of the two ends of the link rod or of the two link rods forms a hinge with two hinge axes, preferably a ball hinge.

The control of the break-away movement can additionally be influenced positively if the two first ends and/or the two second ends are located at different levels.

The interplay of forces can be promoted if each link rod extends obliquely downwards/rearwards from its second end, so that the first support frame portion bears against the aforementioned positioning stop.

The feature that the two link rods are located on the same side of the first mounting position, when viewed in transverse direction, is advantageous to the space occupation in transverse direction.

In one embodiment, the link rod or at least one of the link rods is designed as a rod with a fixed length.

Alternatively or additionally, the link rod or at least one of the link rods can be designed as a cylinder assembly. The pressure of the fluid of the cylinder can, for example, be set at a threshold value above which the cylinder can extend for the break-away movement. The cylinders can subsequently be operated to retract for moving the first support frame portion to the operative position.

In a first further development, the second support frame portion also defines the first mounting position. The hinge then forms at that location a connection between the first support frame portion and the second support frame portion. The second support frame portion then forms a frame which is mounted on the three suspension points of the tractor and thus offers many possibilities for selecting a connection point for the support device.

In another, second further development, the first support frame portion defines the first mounting position together with the end of a lifting rod of the tractor and forms an interspace with the second support frame portion.

The assembly according to the invention may be designed in duplicate in order to be active on both sides of the tractor. In this case, two first support frame portions are attached, movably for breaking away, to a common second support frame portion or trestle, wherein for the one first support frame portion the first mounting position is located on the left side of the trestle or, alternatively, at the end of the left lifting rod of the three-point suspension of the tractor, and said one first support frame portion projects with the tool beam on the right and, for the other first support frame portion, the first mounting position is located on the right side of the trestle or, alternatively, at the end of the right lifting rod of the three-point suspension of the tractor, and said other first support frame portion projects with the tool beam on the left.

In the transport position, when viewed in a vertical plane transverse to the direction of travel, the tool beam can be tilted in a direction away from the operative position, displaced through the vertical, so that the outline of the device is limited in width and an additional protection is obtained against a movement towards the operative position.

Also the support frame can be divided into a support frame portion which carries the tool beam in the operative position and a second support frame portion which is stationary with at least two of the suspension means, wherein the first support frame portion is connected to the second support frame portion so as to be rotatable about an axis with a vertical directional component.

The aspects and features described in this description and the claims of the application and/or shown in the figures of this application may, where possible, also be used in a divisional application. These separate aspects may be the subject of split patent applications aimed at them. This holds in particular for the features and aspects which are described per se in the dependent claims.

### BRIEF DESCRIPTION OF THE FIGURES

The invention will be explained with reference to an exemplary embodiment shown in the accompanying figures, in which:
Figures 1A-C show a rear view, a left side view and a top view, respectively, of an exemplary embodiment of an assembly and a device according to the invention, in operative position;
Figures 1A-C show a rear view, a left side view and a top view, respectively, of the exemplary embodiment of the assembly and the device according Figures 1A-C, in the break-away position;
Figure 3 shows a diagram of a possible alternative internal connection in a device according to the invention, and
Figure 4 shows a front view and a side view of the device of Figures 1A-C, in the transport position.

### DETAILED DESCRIPTION OF THE FIGURES

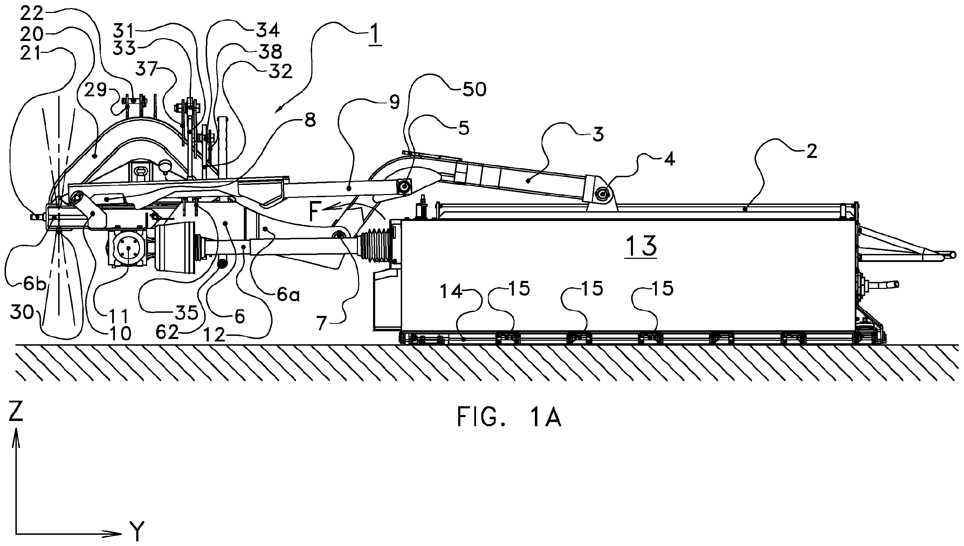

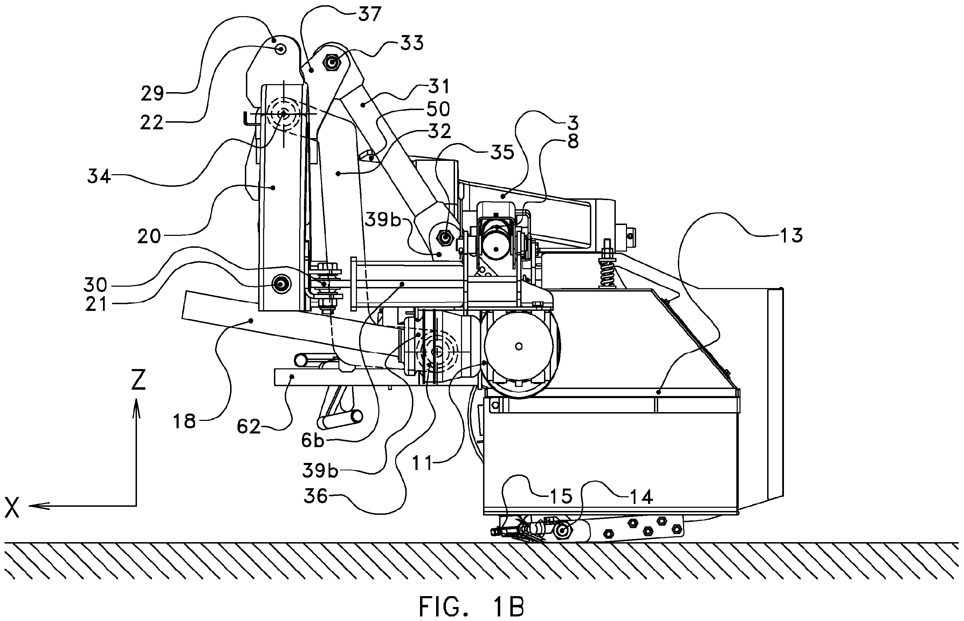

The device 1 according to the invention shown in Figures 1A-C is designed as a mowing device and forms together with the tractor T an assembly according to the invention. For illustrative reasons, the tractor T is only indicated schematically.

The mowing device 1 comprises a support beam 2 which carries a tool assembly 13, here in the form of a box-shaped arrangement, in which are disposed a series of tools, such as mowing units 15, such as mowing discs, which are driven by a drive shaft 14. The drive shaft 14 is driven by the power take-off shaft 18 of the tractor T, via a transmission 11, a telescopic drive shaft 12 and a transmission 16. The drive shaft 12 is at both ends rotatably bearing-supported to be able to pivot in one or more planes which contain the axis of the drive shaft.

The support beam 2 is mounted by means of a hinge 4 to an intermediate arm 3 which is mounted by means of a hinge 7 to a first support frame portion 6 which comprises two portions 6a and 6b which form a rigid unity with each other. The support frame 2 forms together with the tool assembly 13 and the intermediate arm 3 a tool beam. On the support frame portion 6, the part 6b thereof, there is mounted a bracket 10 on which the end of a piston rod 8 of a cylinder assembly 8, 9 is mounted. The other end thereof, of cylinder 9, is mounted to the intermediate arm 3 at the location of a hinge 5. The cylinder assembly 8, 9 can be used to tilt the intermediate arm 3 upwards about the hinge 7 to bring the mowing device 1 into the transport position. During operation, the cylinder assembly 8, 9 can be used to set, from the tractor cabin, the pressure with which the mowing device bears on the mowing field and thus to set the mass to be absorbed by the tractor.

On the rear side of the tractor T there is provided a customary three-point suspension, comprising two lifting rods 44 and 46 and a top rod 45. The rear ends of the rods 44-46 are mounted in a customary manner by means of ball hinges 41-43 to the device 1, in this case the trestle 20 which is rigid itself. The trestle 20 is inversely V-shaped, with on the left side connecting pins 21, on the right side connecting pins 23 and on the top a connecting pin 22 mounted between plates 29 (on of which is shown). Said connecting pins offer, in a customary manner, two juxtaposed mounting positions for the tractor T. The ball hinges 41-43 are mounted on the pins 21-23, to form a first mounting position, left below (21 with 41), a second mounting position, right below (23 with 43) and a third mounting position, on the top (22 with 42) for the device 1 to the tractor T.

The trestle 20 forms a second support frame portion of the device 1, which is located between the tractor T and the first support frame portion 6. The two support frame portions 6 and 20 are interconnected by a ball hinge 30 which is located close to the pins 21, at the left end of the first support frame portion 6. At positions which, when viewed in the transverse direction Y, are located between the second and third mounting positions, the two support frame portions are interconnected by two connecting or link rods 31 and 32. The link rods 31 and 32 have a fixed length, can transfer pressure and tensile forces, while being connected at their ends to the two support frame portions 6 and 20. For example, the rods 31 and 32, respectively, are connected to the second support frame portion or trestle 20, at the location of hinges 33 and 34, respectively, located between ear plates 37 and 38 which are welded to the trestle 20. At the other end, the rods 31 and 32, respectively, are connected to the first support frame portion 6, at the location of hinges 35 and 36, respectively, located between ear plates 39a and 39b which are welded on the portion 6a. The hinge connections 33-36 are configured as ball hinges having a rotatability with the desired range. As a result thereof, it is possible for the link rods 31 and 32 to continue to function as such, for only transferring "normal" forces between the hinges 33-36, when the first support frame portion 6 pivots away from the trestle 20 about the hinge 30.

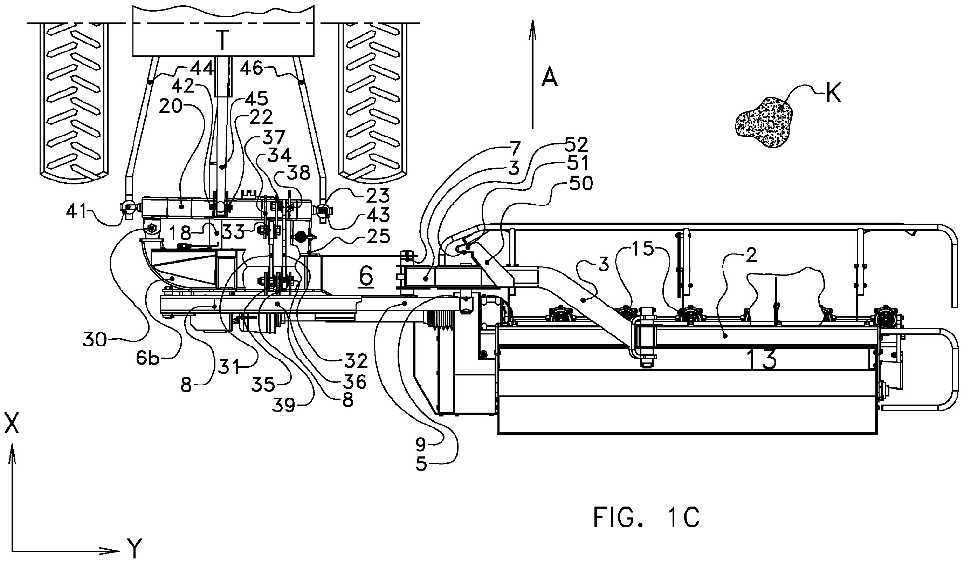

The hinge 33 is located at a higher level and more rearwards than the hinge 34. The hinge 35 is located at a higher level and more rearwards than the hinge 36. Both rods 31 and 32 extend downwards and rearwards. The effective length of rod 31 is smaller than that of rod 32. Rod 32 is substantially S-shaped in order not to be hindered by other components when it is moving. In side view, see Figure 1C, it seems as if a four rod mechanism is formed by the rod 31, the trestle 20, the rod 32 and the portion 6a. In this case, the four "rods" are not situated in one plane, but partly ("rods" 20 and 6a) even substantially transversely thereto. Nevertheless, a movement mechanism comparable thereto is achieved, the position of the corners being defined by the selection of the lengths of the "rods" and the positions of the hinges.

In the operative position, the first support frame portion 6, as a result of the obliquely rearward/downward position of the hinges 35 and 36 with respect to the hinges 33 and 34 of the two rods 31, 32, bears against a stop plate 25 (Figure 1C), which is welded to box 24 that is welded to trestle 20. There is furthermore welded on the sleeve 24 an upright bushing 60 in which a vertical rod 61 is kept in a manner in which it is adjustable in height. The rod 61 is provided at its lower end with a horizontal rod 62 so as to form therewith an inverse T-shaped support. After the device 1 has been disconnected from the tractor T, the trestle 20 can be supported itself by said T-shaped support on a ground. Due to this, the trestle 20 is obstructed to move away from the first support frame portion 6 in the position in which it is disconnected from the tractor T, in which position the device 1 with the tool assembly 13 also bears on the ground.

The two support frame portions 6 and 20 may, in addition to the two link rods, be interconnected by a cylinder assembly with which a value can be set for the force above which a movement of the support frame portion 6 away from the support frame portion 20 can take place. It is also possible for a cylinder to form one of the aforementioned link rods, in which case, for example, in the transport position the orientation of the support frame portion 6 can be influenced, by adjustment/setting the length of the cylinder.

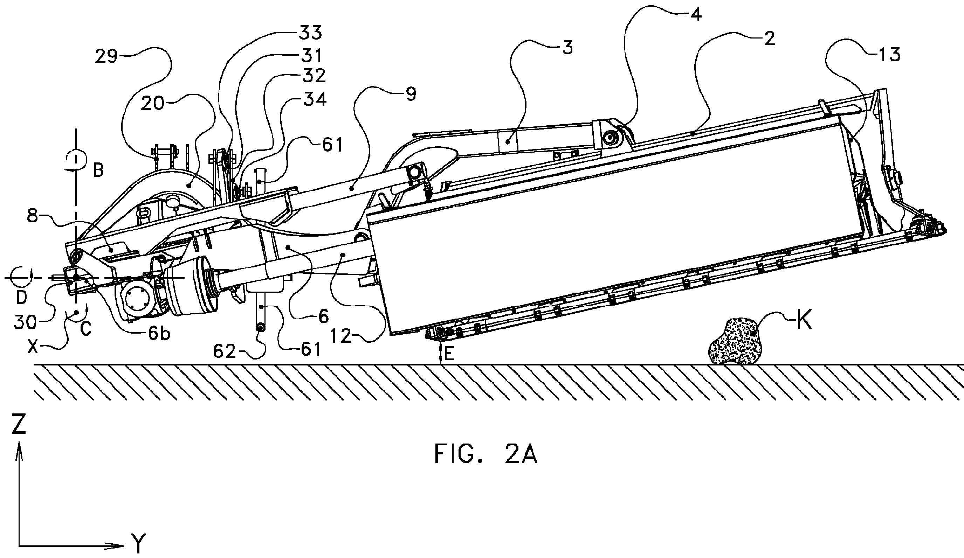

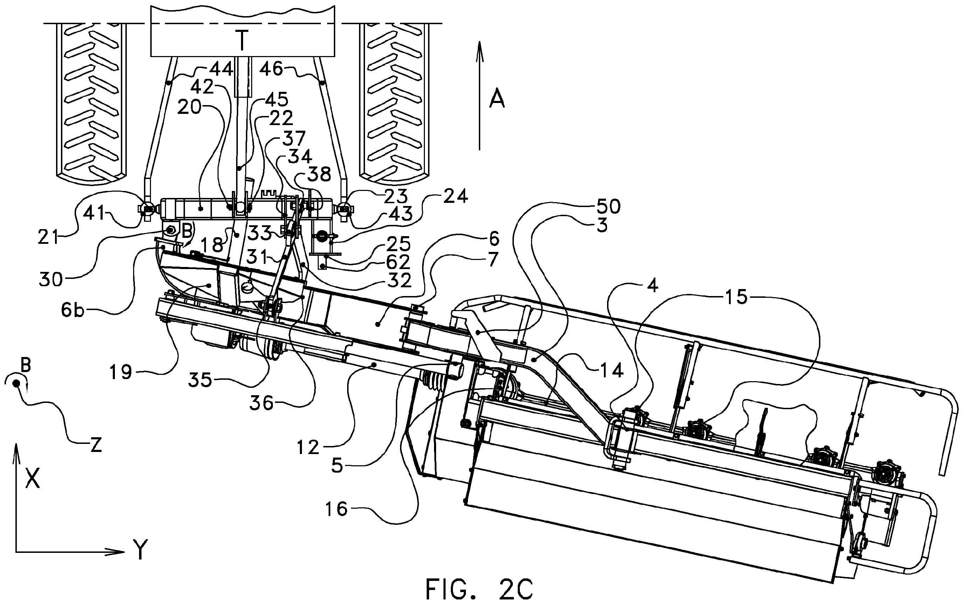

If, when moving in the direction of travel A (direction X) the tools 15 or another part of the tool assembly suspended from the tool beam 2 encounters a stone or other obstacle, such as a tree trunk, this will result in a counterforce being exerted. If said counterforce is sufficiently large and, consequently, the stone will not be pushed along, the whole of tool assembly, support beam 2, intermediate arm 3 and first support frame portion 6, together with the cylinder assembly 8, 9 set in the selected extended position, will yield in a pivoting movement in the direction B, with a rotation about hinge 30, a rotation about the vertical Z. Due to the connection with the second support frame portion 20, via the two link rods 31 and 32, the first support frame portion 6 will then also be forced upwardly, in a rotation about the horizontal X, direction C. An example of such a displaced position, break-away position, is shown in Figures 2A-C.

In a further embodiment, the cylinder assembly 8, 9 forms a double cylinder, in which case the cylinder 8 is in connection with an accumulator and can be adjusted in pressure. The cylinder 9 is floating during operation and can be operated from the cabin for pivoting to the transport position.

The magnitude of the (counter)force required for break-away can be influenced by the weight distribution for the tool assembly (extent to which the tool assembly bears on the mowing field and bears, via support frame portion 6, against the trestle 20, in particular the stop plate 25), to be set by means of the fluid pressure in cylinder 9 (cylinder 8 in the just mentioned further embodiment). In case of a lower ground pressure, the counterforce required for breaking out will be higher than at a high ground pressure.

Like in this example, according to the invention, it is possible for a tool assembly with support beam, etcetera, to break out to a greater or smaller extent, by means of a swinging movement about the hinge at the first mounting position, to a break-away position, in which case simultaneous rotation about axis X and about axis Z takes place, in which case the support device defines the movement path.

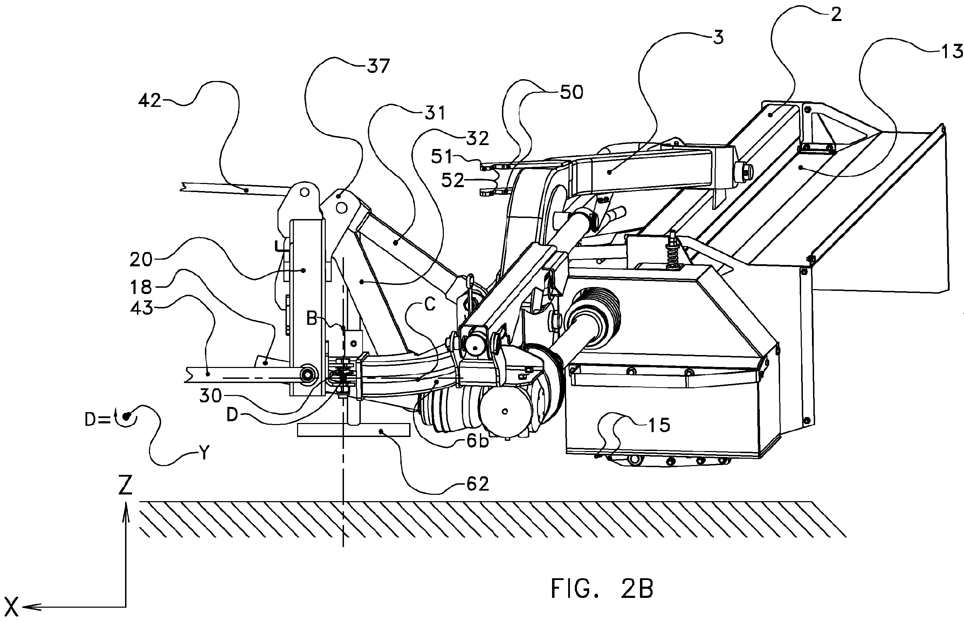

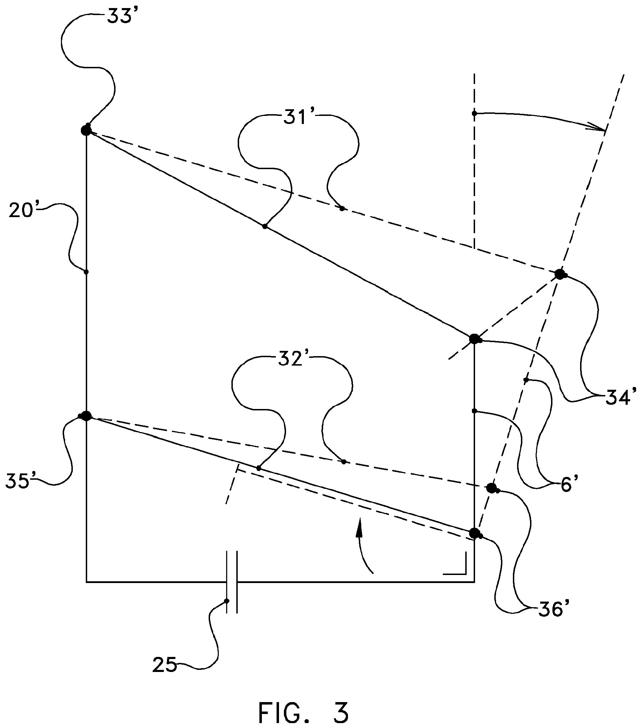

If the link rods would be disposed and designed so as to achieve a true parallelogram construction, the orientation in a vertical plane containing the direction A would remain unchanged. However, by deviating therefrom, a rotation about the Y-axis can be effected, direction D, as shown in Figure 2B. A schematic example is shown in Figure 3, in which the link rods constitute part of an asymmetric trapezium, in which the rods 31' and 32' and the "rods" formed by material of the trestle 20' and the first support frame portion 6' are situated in one vertical plane and the hinges 33' and 35' are superposed and the same holds for the hinges 34' and 36', the length of the upper rod 31' being greater than that of the lower rod 32'. In the case of break-away of the first support frame portion 6', the 'rod' of the first support frame portion 6' will relatively tilt rearwards, which is advantageous in the break-away manoeuvre because as a result thereof the front side of the tool assembly is moved upwards to a greater extent and the obstacle can be bypassed more fluently.

In the example of Figures 1A-C and 2A-C, the rod mechanism is more complex by the intermediate distance of the hinges 33-34 and 35-36, but also here, if proper dimensions have been selected, it is possible for the person skilled in the art to achieve in a simple manner a comparable effect, so that, in front, the distance E (Figure 2A) to the mowing field is greater than at locations situated therebehind.

In a non-shown alternative embodiment, the trestle only defines the second and third mounting positions and the first support frame portion is mounted directly to the ball hinge at the location of the first mounting position. Said ball hinge can then perform the function of the aforementioned hinge 30. Also in the latter case, there may be provided between the first and the second support frame portion a few link rods to achieve the desired rotating movements.

In another alternative embodiment, (not shown), there is provided in addition to a single link rod that is transversely spaced apart from the hinge 30, for example at the level of the second mounting point, a second link rod that extends over the hinge 30 and is mounted by one end on the trestle 20 somewhat above and (transversely) inwards (to the right) with respect to the first, left, mounting position and is mounted by the other end on the portion 6b of the first support frame portion, to the left (transversely) with respect to the aforementioned first end, in particular somewhat left with respect to the first mounting position, so that there is formed a pusher rod in the case of break-away. In this embodiment, there can be more space available for other components between the first support frame portion 6 and the trestle 20.

In another, not shown embodiment, again in aforementioned addition, a link rod can be located on the left side of hinge 30.

In another, non-shown embodiment one or a plurality of link rods are designed as a cylinder assembly, so that the length is settable.

After the break-away movement has attained its maximum, the first support frame portion 6 will move back to against the second support frame portion 20 (stop 25), into the operative position. The link rods 31 and 32 then return to their initial position.

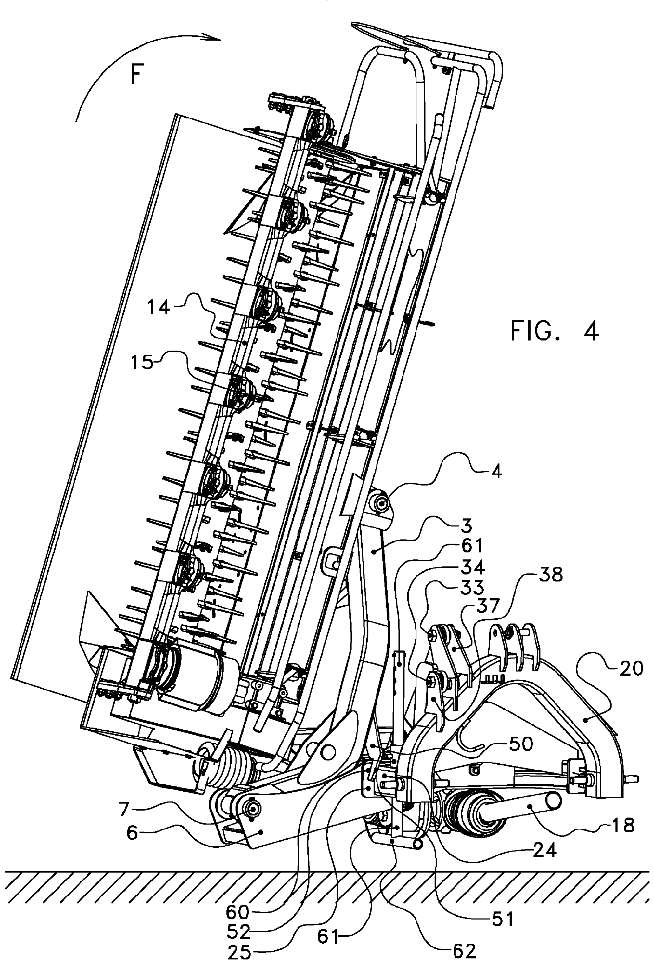

If the tool assembly has to be transported to another location, the cylinder assembly/the double cylinder 8, 9 can be operated to perform a retraction and, at internal shifting in drive rod 12 and rotation in both ends of the drive rod 12, to pivot the support beam 2 and the intermediate arm 3 about the hinge 7 upwards (direction F) into the transport position shown in Figure 4. In order to prevent the unlikely event of the first support frame portion 6 pivoting away from the trestle 20, there are welded on the intermediate arm 3 a set of ears 50 which define lips 51 with stop edges 52. When pivoting (direction F) about the hinge 7, the lips 51 pivot exactly behind the aforementioned stop plate 25 and the edges 52 engage behind the front side of said plate on both sides of the sleeve 24 so that the locking is activated.

It is remarked that the device may be designed in duplicate, in which case two first support frame portions are mounted so as to be movable for breaking away, in a manner according to the invention, to a common second support frame portion or trestle, wherein the one first support frame portion is pivotably mounted on the left side of the trestle or, alternatively, at the end of the left lifting rod of the three-point suspension of the tractor, and projects with the tool assembly on the right, and the other first support frame portion is pivotably mounted on the right side of the trestle or, alternatively, at the end of the right lifting rod of the three-point suspension of the tractor, and said other first support frame portion projects with the tool assembly on the left. In this case, each first support frame portion is movably mounted to the trestle by means of its own support device.

The above-mentioned description serves to illustrate the operation of preferred embodiments of the invention, and not to limit the scope of the invention. On the basis of the above-mentioned explanation, it will be obvious for a person skilled in the art that there are many variations falling within the scope of the present invention, as defined by the claims.

## Claims

1. Assembly of a tractor (T) with a three-point suspension (44-46) and a device (1) for performing activities on an agricultural land, comprising at least one tool beam (3,2,13), a portion of which on one side projects laterally with respect to the tractor and which comprises a number of juxtaposed tools (15), such as crop mowers, which are supported by the tool beam, wherein the tool beam is mounted to a support frame (20,6) which, at the location of a first (21), a second (23) and a third (22) mounting position, is mounted to the three-point suspension of the tractor, wherein the first mounting position (21) and the second mounting position (23), respectively, are located at the end of the support frame (20,6) which faces away from the projecting portion of the tool beam (3,2,13), and at a location between the first mounting position (21) and the projecting portion of the tool beam, respectively, and the third mounting position (22) is located above the first and the second mounting positions (21,23), wherein the support frame is divided into a first support frame portion (6) on which the tool beam is mounted and a second support frame portion (20), wherein the first support frame portion (6) extends between the first mounting position (21) and the tool beam (3,2,13) wherein the second support frame portion (20) defines at least the second and third mounting positions (23,22), wherein the first support frame portion (6) is connected by means of a support device to the second support frame portion (20), which support device, at one or more locations which, viewed in a direction transverse to the direction of travel, are spaced apart from the first mounting position, movably interconnects the first and the second support frame portions (6,20) for supporting the first support frame portion in a break-away position spaced apart from the second support frame portion wherein the first support frame portion (6) is rotatable in or near the first mounting position (21), in a hinge (30), taking along the tool beam, between an operative position and one or more break-away positions about an axis which has a vertical directional component and is further rotatable in said hinge (30) about an axis which has a horizontal directional component parallel to the direction of travel of the tractor and in that the hinge (30) is stationary with respect to the first mounting position (21) and with respect to the first support frame portion (6)**characterised in that** the assembly is further provided with locking means (50,51) for locking the first support frame portion (6) and the second support frame portion (20) against moving away from each other, wherein the locking means (50,51) are provided, on the one hand, on the tool beam and, on the other hand, on the second support frame portion (20), wherein the tool beam is movable with respect to the first support frame portion (6) between a substantially horizontal operative position and a substantially vertical transport position in which the locking means (50,51) are effective, and wherein, the locking means are adapted for activation by moving the first support frame portion (6) into the transport position.

2. Assembly according to claim 1, wherein the support device is configured for the spatial orientation of the first support frame portion (6) in the break-away position, wherein the first support frame portion (6) with tool beam is preferably rotatable about the hinge (30) about a horizontal axis transversely to the direction of travel, in particular to a break-away position having an upwardly tilted position, viewed in a vertical plane parallel to the direction of travel.

3. Assembly according to claim 1 or 2, wherein the second support frame portion (20) is provided with a positioning stop for the first support frame portion (6), wherein, preferably, the second support frame portion (20) is provided with a support stop for the first support frame portion (6) in the operative position.

4. Assembly according to one of the preceding claims, wherein the support device movably interconnects the first and the second support frame portions (6,20) by means of one or more connections, such as rods, which, viewed in projection on a vertical plane perpendicularto the direction of travel, are located at least partly, preferably wholly, between the second and the third mounting positions (23,22).

5. Assembly according to one of the preceding claims, wherein the support device comprises two connections (31,32), such as rods, for movably interconnecting the first and the second support frame portions (6,20), which connections, viewed in a horizontal transverse direction, transversely to the direction of travel, are spaced apart from each other, wherein, preferably, the two connections are both wholly located on the same side of the first mounting position (21), viewed in the aforementioned transverse direction.

6. Assembly according to one of the preceding claims, wherein the support device, for providing the movable connection between the first and the second support frame portions (6,20), comprises at least one link rod (31,32) which is movably, in particular rotatably, in particular hingedly, connected by a first end to the first support frame portion (6) and by a second end to the second support frame portion (20), wherein, preferably, the support device comprises at least a first and a second link rod (31,32), which are each movably, in particular rotatably, in particular hingedly, connected by a first end to the first support frame portion (6) and by a second end to the second support frame portion (20), wherein, preferably, the two first ends and/or the two second ends of the two link rods (31,32), when viewed in a horizontal transverse direction, are spaced apart from each other and/or are located at different levels.

7. Assembly according to claim 6, wherein at least one end of the link rod, or at least one of the two link rods (31,32), forms a hinge with two hinge axes, preferably a ball hinge (33,34,35,36), wherein, preferably, each of the two ends of the link rod, or of the two link rods (31,32), forms a hinge with two hinge axes, preferably a ball hinge (33,34:35,36).

8. Assembly according to claim 6 or 7, wherein each link rod (31,32) extends obliquely downwards from its second end.

9. Assembly according to one of the preceding claims, wherein the second support frame portion (20) forms a stiff body between the second and the third mounting positions (23,22).

10. Assembly according to one of claims 6-8, wherein the link rod, or at least one of the link rods (31,32), is designed as a rod with a fixed length.

11. Assembly according to one of claims 6-8, wherein the link rod, or at least one of the link rods (31,32), is designed so as to be settable in length, in particular as a cylinder assembly.

12. Assembly according to one of the preceding claims, wherein the second support frame portion (20) also determines the first mounting position (21), wherein, preferably, near the first mounting position (21), the first support frame portion (6) is connected to the second support frame portion (20) by means of the hinge.

13. Assembly according to one of claims 1-11, wherein the first support frame portion (6) defines the first mounting position (21) together with the end of a lifting rod of the tractor, and the second support frame portion (20) defines an interspace therewith.

14. Assembly according to one of the preceding claims, wherein two first support frame portions (6) are attached, movably for breaking away, to a common second support frame portion or trestle (20), wherein for the one first support frame portion (6) the first mounting position (21) is located on the left side of the trestle or, alternatively, at the end of the left lifting rod of the three-point suspension of the tractor, and said one first support frame portion (6) projects with the tool beam on the right and, for the other first support frame portion (6) the first mounting position (21) is located on the right side of the trestle or, alternatively, at the end of the right lifting rod of the three-point suspension of the tractor, and said other first support frame portion (6) projects with the tool beam on the left.

## Patentansprüche

1. Baugruppe aus einem Traktor (T) mit einer Dreipunktaufhängung (44-46) und einer Vorrichtung (1) zum Ausführen von Tätigkeiten auf einer landwirtschaftlichen Nutzfläche, mit
mindestens einem Werkzeugbalken (3, 2, 13), von dem ein Teil auf einer Seite relativ zu dem Traktor (T) seitlich hervorsteht, und mit einer Anzahl von nebeneinander angeordneten Werkzeugen (15), wie Erntegutmäheinrichtungen, die durch den Werkzeugbalken (3, 2, 13) getragen sind, wobei der Werkzeugbalken an einem Tragrahmen (20, 6) montiert ist, der an dem Ort einer ersten (21), einer zweiten (23) und einer dritten (22) Montageposition an der Dreipunktaufhängung des Traktors montiert ist, wobei die erste Montageposition (21) bzw. die zweite Montageposition (23) an dem von dem vorstehenden Teil des Werkzeugbalkens abgewandten Ende des Tragrahmens (20, 6) bzw. an einem Ort zwischen der ersten Montageposition (21) und dem vorstehenden Abschnitt des Werkzeugbalkens angeordnet sind, und die dritte Montageposition (22) über der ersten (21) und der zweiten (23) Montageposition angeordnet ist, wobei der Tragrahmen geteilt ist in einen ersten Tragrahmenteil (6), auf dem der Werkzeugbalken montiert ist, und einen zweiten Tragrahmenteil (20), wobei sich der erste Tragrahmenteil (6) zwischen der ersten Montageposition (21) und dem Werkzeugbalken (3, 2, 13) erstreckt, wobei der zweite Tragrahmenteil (20) mindestens die zweite (23) und dritte (22) Montageposition definiert, wobei der erste Tragrahmenteil (6) mittels einer Tragvorrichtung mit dem zweiten (20) Tragrahmenteil verbunden ist, welche an einem oder mehreren Orten, die, gesehen in einer Richtung quer zu der Bewegungsrichtung, von der ersten Montageposition beabstandet sind, den ersten (6) und den zweiten (20) Tragrahmenteil zum Tragen des ersten Tragrahmenteils in einer Löseposition beabstandet von dem zweiten Tragrahmenteil beweglich verbindet, wobei
der erste Tragrahmenteil (6) in einem Gelenk (30) in oder nahe der ersten Montageposition (21) um eine Achse mit einer vertikalen Richtungskomponente drehbar zwischen einer Betriebsposition und einer oder mehrerer Lösepositionen ist und dabei den Werkzeugbalken mitnimmt und weiterhin in dem Gelenk (30) um eine Achse mit einer horizontalen Richtungskomponente parallel zu der Bewegungsrichtung des Traktors drehbar ist und dadurch, dass das Gelenk (30) relativ zu der ersten Montageposition (21) und relativ zu dem ersten Tragrahmenteil (6) ortsfest ist, **dadurch gekennzeichnet, dass**
die Baugruppe weiterhin mit Feststellmitteln (50, 51) zum Feststellen des ersten Tragrahmenteils (6) und des zweiten Tragrahmenteils (20) gegen ein Bewegen voneinander weg versehen ist, wobei die Feststellmittel (50, 51) einerseits an dem Werkzeugbalken und andererseits an dem zweiten Tragrahmenteil (20) vorgesehen sind, wobei der Werkzeugbalken in Bezug auf den ersten Tragrahmenteil (6) zwischen einer in Wesentlichen horizontalen Betriebsposition und einer vorzugsweise im Wesentlichen vertikalen Transportposition beweglich ist, in der die Feststellmittel (50, 51) wirken, und wobei die Feststellmittel für eine Aktivierung durch ein Bewegen des ersten Tragrahmenteils (6) in die Transportposition angepasst sind.

2. Baugruppe nach Anspruch 1, wobei die Tragvorrichtung für die räumliche Orientierung des ersten Tragrahmenteils (6) in der Löseposition konfiguriert ist, wobei der erste Tragrahmenteil (6) mit dem Werkzeugbalken vorzugsweise um eine horizontale Achse quer zu der Bewegungsrichtung um das Gelenk (30) drehbar ist, insbesondere in eine Löseposition mit einer aufwärts gekippten Position gesehen in einer Vertikalebene parallel zu der Bewegungsrichtung.

3. Baugruppe nach Anspruch 1 oder 2, wobei der zweite Tragrahmenteil (20) mit einem Positionierungsanschlag für den ersten Tragrahmenteil (6) versehen ist, wobei vorzugsweise der zweite Tragrahmenteil (20) mit einem Traganschlag für den ersten Tragrahmenteil (6) in der Betriebsposition versehen ist.

4. Baugruppe nach einem der vorhergehenden Ansprüche, wobei die Tragvorrichtung den ersten (6) und zweiten Tragrahmenteil (20) mittels einer oder mehrerer Verbindungen, wie etwa Stangen, beweglich verbindet, die, gesehen in einer Projektion auf eine Vertikalfläche senkrecht zu der Bewegungsrichtung, mindestens teilweise, vorzugsweise ganz, zwischen der zweiten (23) und der dritten (22) Montageposition angeordnet sind.

5. Baugruppe nach einem der vorhergehenden Ansprüche, wobei die Tragvorrichtung zwei Verbindungen (31, 32), wie etwa Stangen, zum beweglichen Verbinden des ersten (6) und des zweiten (20) Tragrahmenteils aufweist, die, gesehen in einer horizontalen Querrichtung, quer zu der Bewegungsrichtung, voneinander beabstandet sind, wobei vorzugsweise die beiden Verbindungen beide ganz auf derselben Seite der ersten (21) Montageposition, gesehen in die zuvor erwähnte Querrichtung, angeordnet sind.

6. Baugruppe nach einem der vorhergehenden Ansprüche, wobei die Tragvorrichtung zum Herstellen der beweglichen Verbindung zwischen dem ersten (6) und dem zweiten (20) Tragrahmenteil mindestens eine Verbindungsstange (31, 32) aufweist, die beweglich, insbesondere drehbar, insbesondere gelenkig, mit einem ersten Ende mit dem ersten Tragrahmenteil (6) und mit einem zweiten Ende mit dem zweiten Tragrahmenteil (20) verbunden ist, wobei vorzugsweise die Tragvorrichtung mindestens eine erste und eine zweite Verbindungsstange (31, 32) aufweist, die jeweils beweglich, insbesondere drehbar, insbesondere gelenkig, mit einem ersten Ende mit dem ersten Tragrahmenteil (6) und mit einem zweiten Ende mit einem zweiten Tragrahmenteil (20) verbunden sind, wobei vorzugsweise die beiden ersten Enden und/oder die beiden zweiten Enden der beiden Verbindungsstangen gesehen in eine horizontale Querrichtung voneinander beabstandet sind und/oder auf verschiedenen Ebenen angeordnet sind.

7. Baugruppe nach Anspruch 6, wobei mindestens ein Ende der Verbindungsstange oder mindestens eine der beiden Verbindungsstangen (31, 32) ein Gelenk mit zwei Gelenkachsen bildet, vorzugsweise ein Kugelgelenk (33, 34, 35, 36), wobei vorzugsweise jedes der beiden Enden der Verbindungsstange oder der beiden Verbindungsstangen (31, 32) ein Gelenk mit zwei Gelenkachsen bildet, vorzugsweise ein Kugelgelenk (33, 34, 35, 36).

8. Baugruppe nach Anspruch 6 oder 7, wobei sich jede Verbindungsstange (31, 32) von ihrem zweiten Ende schräg nach unten erstreckt.

9. Baugruppe nach einem der vorhergehenden Ansprüche, wobei der zweite Tragrahmenteil (20) zwischen der zweiten (23) und der dritten (22) Montageposition einen steifen Körper bildet.

10. Baugruppe nach mindestens einem der Ansprüche 6-8, wobei die Verbindungsstange oder mindestens eine der Verbindungsstangen (31, 32) als Stange mit einer festen Länge gestaltet ist.

11. Baugruppe nach mindestens einem der Ansprüche 6-8, wobei die Verbindungsstange oder mindestens eine der Verbindungsstangen so gestaltet ist, dass sie in der Länge einstellbar ist, insbesondere als Zylinderanordnung.

12. Baugruppe nach mindestens einem der vorhergehenden Ansprüche, wobei der zweite Tragrahmenteil (20) auch die erste Montageposition (21) bestimmt, wobei, vorzugsweise nahe der ersten Montageposition, der erste Tragrahmenteil (6) mittels des Gelenks mit dem zweiten Tragrahmenteil (20) verbunden ist.

13. Baugruppe nach mindestens einem der Ansprüche 1-11, wobei der erste Tragrahmenteil (6) zusammen mit einem Ende einer Hubstange des Traktors die erste Montageposition (21) definiert und der zweite Tragrahmenteil (20) damit einen Zwischenraum definiert.

14. Baugruppe nach mindestens einem der vorhergehenden Ansprüche, wobei die beiden ersten Tragrahmenteile (6) zum Lösen beweglich an einem gemeinsamen zweiten Tragrahmenteil oder Gestell (20) befestigt sind, wobei für den einen ersten Tragrahmenteil (6) die erste Montageposition (21) auf der linken Seite des Gestells angeordnet ist, oder alternativ an dem Ende der linken Hubstange der Dreipunktaufhängung des Traktors, und dieser erste Tragrahmenteil (6) mit dem Werkzeugbalken rechts hervorsteht und für den anderen ersten Tragrahmenteil (6) die erste Montageposition (21) auf der rechten Seite des Gestells angeordnet ist, oder alternativ an dem Ende der rechten Hubstange der Dreipunktaufhängung des Traktors, und dieser andere erste Tragrahmenteil (6) mit dem Werkzeugbalken links hervorsteht.

## Revendications

1. Ensemble d'un tracteur (T) avec une suspension à trois points (44 à 46) et d'un dispositif (1) destiné à exécuter des activités sur un terrain agricole, comprenant au moins une barre d'outil (3, 2, 13), dont une partie sur un premier côté s'étend latéralement par rapport au tracteur et comprend un certain nombre d'outils (15) juxtaposés, tels que des faucheuses de récolte, qui sont supportés par la barre d'outil, dans lequel la barre d'outil est montée sur un bâti de support (20, 6) qui, à l'emplacement d'une première (21), d'une deuxième (23) et d'une troisième (22) positions de montage, est monté sur la suspension à trois points du tracteur, dans lequel respectivement la première position de montage (21) et la deuxième position de montage (23) sont situées à l'extrémité du bâti de support (20, 6) qui est en regard de la partie en saillie de la barre d'outil (3, 2, 13) et respectivement à un emplacement entre la première position de montage (21) et la partie en saillie de la barre d'outil, et la troisième position de montage (22) est située au-dessus des première et deuxième positions de montage (21, 23), dans lequel le bâti de support est divisé en une première partie de bâti de support (6) sur laquelle la barre d'outil est montée et une seconde partie de bâti de support (20), dans lequel la première partie de bâti de support (6) s'étend entre la première position de montage (21) et la barre d'outil (3, 2, 13) dans lequel la seconde partie de bâti de support (20) définit au moins les deuxième et troisième positions de montage (23, 22), dans lequel la première partie de bâti de support (6) est reliée au moyen d'un dispositif de support à la seconde partie de bâti de support (20), lequel dispositif de support, au niveau d'un ou plusieurs emplacements qui, vus dans une direction transversale à la direction de déplacement, sont à l'écart de la première position de montage, relie de manière mobile les première et seconde parties de bâti de support (6, 20) afin de supporter la première partie de bâti de support dans une position de dégagement à l'écart de la seconde partie de bâti de support dans lequel la première partie de bâti de support (6) peut tourner dans ou à proximité de la première position de montage (21), sur une articulation (30), agencée le long de la barre d'outil, entre une position opérationnelle et une ou plusieurs positions de dégagement autour d'un axe qui présente une composante directionnelle verticale et peut, en outre, tourner sur ladite articulation (30) autour d'un axe qui présente une composante directionnelle horizontale parallèle à la direction de déplacement du tracteur et dans lequel l'articulation (30) est fixe par rapport à la première position de montage (21) et par rapport à la première partie de bâti de support (6) **caractérisé en ce que** l'ensemble comporte, en outre, des moyens de verrouillage (50, 51) destinés à verrouiller le déplacement de la première partie de bâti de support (6) et la seconde partie de bâti de support (20) à l'écart l'une de l'autre, dans lequel les moyens de verrouillage (50, 51) sont agencés, d'une part, sur la barre d'outil et, d'autre part, sur la seconde partie de bâti de support (20), dans lequel la barre d'outil peut être déplacée par rapport à la première partie de bâti de support (6) entre une position opérationnelle sensiblement horizontale et une position de transport sensiblement verticale dans laquelle les moyens de verrouillage (50, 51) sont opérationnels, et dans lequel les moyens de verrouillage sont adaptés de manière à être activés en déplaçant la première partie de bâti de support (6) dans la position de transport.

2. Ensemble selon la revendication 1, dans lequel le dispositif de support est configuré afin d'assurer l'orientation spatiale de la première partie de bâti de support (6) dans la position de dégagement, dans lequel la première partie de bâti de support (6) avec la barre d'outil peut, de préférence, tourner autour de l'articulation (30), autour d'un axe horizontal transversalement à la direction de déplacement, en particulier vers une position de dégagement présentant une position inclinée vers le haut, vue dans un plan vertical parallèle à la direction de déplacement.

3. Ensemble selon la revendication 1 ou 2, dans lequel la seconde partie de bâti de support (20) est équipée d'une butée de positionnement pour la première partie de bâti de support (6), dans lequel, de préférence, la seconde partie de bâti de support (20) est équipée d'une butée de support pour la première partie de bâti de support (6) en position opérationnelle.

4. Ensemble selon l'une des revendications précédentes, dans lequel le dispositif de support relie de manière mobile les première et seconde parties de bâti de support (6, 20) au moyen d'une ou plusieurs liaisons, telles que les tiges, qui, vues en projection sur un plan vertical perpendiculaire à la direction de déplacement, sont situées au moins partiellement, de préférence, entièrement, entre les deuxième et troisième positions de montage (23, 22).

5. Ensemble selon l'une des revendications précédentes, dans lequel le dispositif de support comprend deux liaisons (31, 32), telles que des tiges, afin de relier de manière mobile les première et seconde parties de bâti de support (6, 20), lesquelles liaisons, vues suivant une direction transversale horizontale, transversalement par rapport à la direction de déplacement, sont séparées l'une de l'autre, dans lequel, de préférence, les deux liaisons sont toutes deux situées entièrement du même côté de la première position de montage (21), vues suivant la direction transversale mentionnée précédemment.

6. Ensemble selon l'une des revendications précédentes, dans lequel le dispositif de support, de manière à assurer la liaison mobile entre la première et la seconde parties de bâti de support (6, 20), comprend au moins une biellette (31, 32) qui est reliée de manière mobile, en particulier, en rotation, plus particulièrement, angulairement, par une première extrémité à la première partie de bâti de support (6) et par une seconde extrémité à la seconde partie de bâti de support (20), dans lequel, de préférence, le dispositif de support comprend au moins une première et deuxième biellettes (31, 32), qui sont chacune reliées de manière mobile, en particulier, en rotation, plus particulièrement, angulairement, par une première extrémité à la première partie de bâti de support (6) et par une seconde extrémité à la seconde partie de bâti de support (20), dans lequel, de préférence, les deux premières extrémités et/ou les deux secondes extrémités des deux biellettes (31, 32), lorsqu'elles sont vues suivant une direction transversale horizontale, sont séparées l'une de l'autre et/ou sont situées à différents niveaux.

7. Ensemble selon la revendication 6, dans lequel au moins une extrémité de la biellette ou d'au moins une des deux biellettes (31, 32), forme une articulation avec deux axes d'articulation, de préférence, une articulation sphérique (33, 34, 35, 36), dans lequel, de préférence, chacune des deux extrémités de la biellette, ou des deux biellettes (31, 32), forme une articulation avec deux axes d'articulation, de préférence, une articulation sphérique (33, 34 ; 35, 36).

8. Ensemble selon la revendication 6 ou 7, dans lequel chaque biellette (31, 32) s'étend à l'oblique vers le bas à partir de sa seconde extrémité.

9. Ensemble selon l'une des revendications précédentes, dans lequel la seconde partie de bâti de support (20) forme un corps rigide entre la deuxième et la troisième positions de montage (23, 22).

10. Ensemble selon l'une des revendications 6 à 8, dans lequel la biellette, ou au moins une des biellettes (31, 32), est conçue comme une tige avec une longueur fixe.

11. Ensemble selon l'une des revendications 6 à 8, dans lequel la biellette, ou au moins une des biellettes (31, 32), est conçue de manière à pouvoir être réglée en longueur, en particulier, comme un ensemble de vérin.

12. Ensemble selon l'une des revendications précédentes, dans lequel la seconde partie de bâti de support (20) détermine aussi la première position de montage (21), dans lequel, de préférence, à proximité de la première position de montage (21), la première partie de bâti de support (6) est reliée à la seconde partie de bâti de support (20) au moyen de l'articulation.

13. Ensemble selon l'une des revendications 1 à 11, dans lequel la première partie de bâti de support (6) définit la première position de montage (21) ensemble avec l'extrémité d'une tige de levage du tracteur et la seconde partie de bâti de support (20) définit un inter-espace avec celle-ci.

14. Ensemble selon l'une des revendications précédentes, dans lequel deux premières parties de bâti de support (6) sont liées, de manière mobile afin de pouvoir s'écarter, au niveau d'une deuxième partie de bâti de support commune ou tréteau (20), dans lequel, pour une première partie de bâti de support (6), la première position de montage (21) est située du côté gauche du tréteau ou, en variante, à l'extrémité de la tige de levage gauche de la suspension à trois points du tracteur, et ladite une première partie de bâti de support (6) s'étend avec la barre d'outil sur la droite et, pour l'autre première partie de bâti de support (6), la première position de montage (21) est située du côté droit du tréteau ou, en variante, à l'extrémité de la tige de levage droite de la suspension à trois points du tracteur, et ladite autre première partie de bâti de support (6) s'étend avec la barre d'outil sur la gauche.
